# EUROPEAN PATENT SPECIFICATION

(11) **EP 2 431 123 B1**
(45) Date of publication and mention of the grant of the patent: **26.11.2014**
(21) Application number: 11181293.9
(22) Date of filing: 14.09.2011
(51) Int. Cl.: B23Q 5/58, B23Q 11/00, G05B 19/4061, B27G 19/04

(54) **Anti-collision system and method**
Antikollisionsystem und -Verfahren
Système et méthode anti-collision

(30) Priority: 15.09.2010 IT MO20100259
(43) Date of publication of application: 21.03.2012
(73) Proprietor: SCM Group S.p.A., 47900 Rimini (IT)
(72) Inventor: Gabrielli, Valter, 47865 San Leo (RN) (IT); Balsamini, Guglielmo, 48121 Ravenna (IT)
(74) Representative: Pandolfi, Paolo

(56) References cited:
- FR-A1- 2 633 551
- US-A1- 2009 048 713

## Description

The invention relates to an anti-collision system and method for a machine for machining workpieces made of wood or similar materials.

In particular, the invention relates to an anti-collision system and method for a spindle moulder.

Spindle moulders are known comprising a milling tool and a supporting plane for supporting the workpieces.

The milling tool operationally positioned above the supporting plane is mounted on a spindle shaft that is rotatable around a rotation axis thereof.

The spindle shaft, and the milling tool therewith, is movable axially along the rotation axis thereof and can be further fixed to or tilted with respect to the supporting plane.

In this manner, in use, it is possible to adjust both a working height of the milling tool and a tilt thereof, in the case of a spindle shaft that is tiltable, in relation to the supporting plane according to the dimensions of the workpiece and of the type of machining that it is desired to perform.

The aforesaid supporting plane comprises a movable plane, facing and movable towards and away from the milling tool.

In use, depending on the position of the spindle shaft with respect to the supporting plane and on the diameter of the milling tool, the movable plane is driven manually or by a suitable motor drive towards or away from the milling tool in such a manner as to enable the workpiece to be supported correctly.

Known spindle moulders further comprise a first movable guide and a second movable guide supported by and extending perpendicularly with respect to the supporting plane for guiding, during machining, the workpieces along the supporting plane.

In particular, the first guide and the second guide are substantially aligned and are positioned near and on opposite sides with respect to the milling tool.

In other words, in use, the milling tool is operationally positioned between the first guide and the second guide.

In use, depending on the position of the spindle shaft with respect to the supporting plane and on the diameter of the milling tool, the first guide and the second guide are driven manually or by a suitable motor drive towards or away from the milling tool in such a manner as to enable the workpiece to be supported correctly.

In general, in woodworking machines, it is required that the cutting tool, typically a milling machine, does not collide with machine parts near the cutting tool during relative movement between the tool and such machine parts.

This is in order to prevent damage to the cutting tool and/or to such machine parts during this relative movement and to avoid that parts of the tool that are possibly damaged in the collision can, in use, get detached from the tool and hit an operator located near the machine.

In particular, in the case of the spindle moulder, it is required that the milling tool does not collide with an end portion of the movable plane and with respective further end portions of the first and of the second guide during a relative movement between this end portion and the milling tool and between the latter and the further end portions, both if the spindle shaft is stationary or is rotated. Spindle moulders are known that are provided with an electronic control acting as an anti-collision system.

This electronic control is able to calculate, in function of the diameter of the milling tool mounted on the spindle shaft, possible movements of the spindle shaft that are suitable for preventing possible collisions between the end portion of the movable plane and the milling tool and between the latter and the respective end portions of the first and second guide.

A drawback of these anti-collision systems is that they are particularly costly inasmuch as they require the electronic control to have great calculating capacity.

Further, such anti-collision systems can be subject to human error.

In fact, if an operator enters an incorrect diameter of the milling tool, the electronic control will calculate the aforesaid possible movements on the basis of this incorrect diameter, thus entailing in use probable collisions between the end portion of the movable plane and the milling tool and between the latter and the respective end portions of the first and of the second guide.

Cheaper spindle moulders are also known that are devoid of such anti-collision systems.

Such spindle moulders are nevertheless provided with inserts made of chippable material that are applied at the end portion of the movable plane and of the respective end portions of the first and of the second guide.

In this manner, in use, the collision between the end portion of the movable plane and the milling tool and between the latter and the respective end portions of the first and of the second guide is not avoided but the negative effects thereof are limited.

In fact, following such a collision, the inserts worn down and thus they have to be replaced periodically.

FR-2633551 discloses a machine and a method according to the preamble of claim 1 and 14 respectively.

An object of the invention is to improve the anti-collision systems for a machine for machining workpieces made of wood or similar materials, in particular for a spindle moulder.

A further object is to provide anti-collision systems that are safer than known anti-collision systems.

Still another further object is to obtain anti-collision systems that are less costly than known anti-collision systems.

Still another object is to provide an anti-collision method for a machine for machining workpieces made of wood or similar materials, in particular for a spindle moulder.

The invention provides a machine as defined in independent claim 1.

The invention further provides an anti-collision method for a machine for machining workpieces made of wood or similar materials as defined in independent claim 14.

Owing to the invention, it is possible to obtain an anti-collision system that is safer and cheaper than known anti-collision systems.

In fact, owning to the detection of said current it is possible to obtain a measurement of said distance that is not subject to human errors.

Further, the anti-collision system according to the invention does not require the machine to be provided with an electronic control having great calculation capacities. In fact, said anti-collision control signal can be sent, in the case of a machine with motor-driven movements, directly to movement means of said tool and of said machine parts such as to lock the movement of said tool and of said machine parts, or, in the case of a machine with manual movements, to an alarm system arranged for emitting an alarm warning and/or for controlling a locking device arranged for locking the movement of said tool and of said machine parts. The invention can be better understood and implemented with reference to the attached drawings, which illustrate some embodiments thereof by way of non-limiting example, wherein:
Figure 1 is a perspective view of a spindle moulder;
Figure 2 is an enlarged detail of Figure 1;
Figure 3 is a front view of the detail in Figure 2;
Figure 4 is a side view of the detail in Figure 2;
Figure 5 is an enlarged detail of Figure 4;
Figure 6 is an operating diagram of the anti-collision system according to the invention;
Figure 7 is a version of the operating diagram of the anti-collision system according to the invention;
Figure 8 is a further version of the operating diagram of the anti-collision system according to the invention.

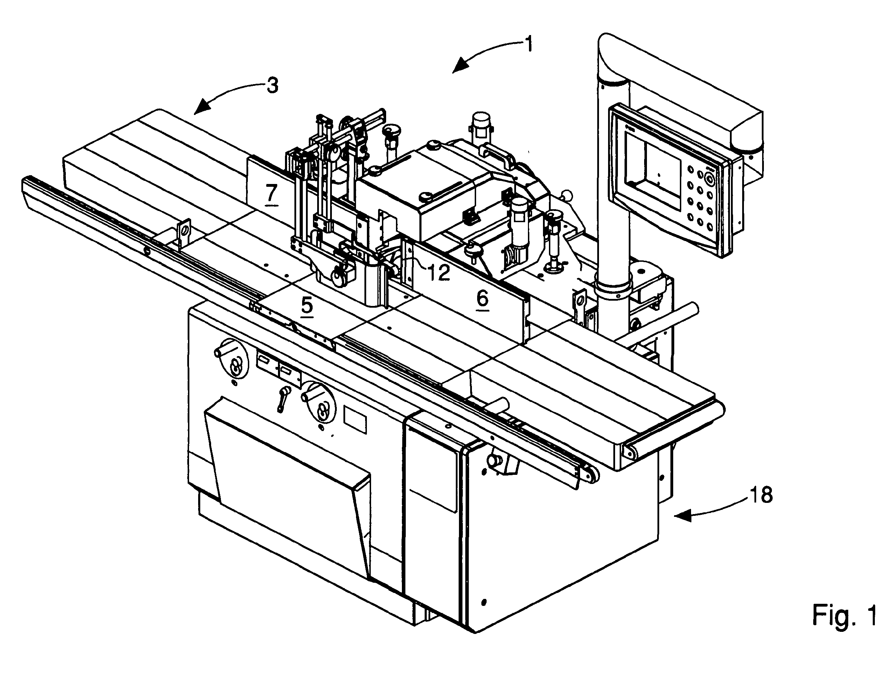

With reference to Figure 1, there is shown a spindle moulder 1 for machining workpieces that are not shown that are made of wood or similar materials.

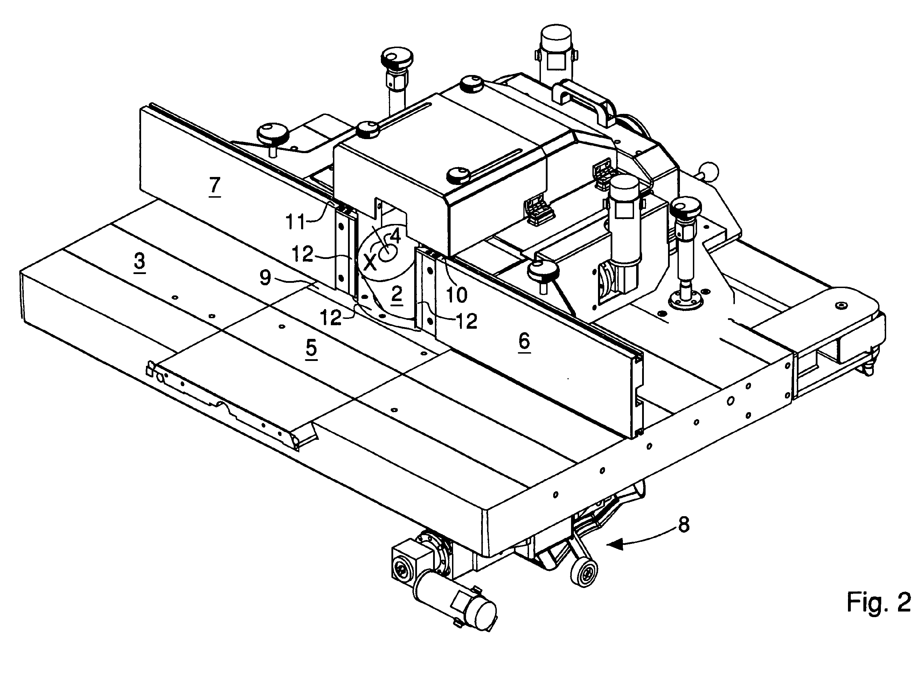

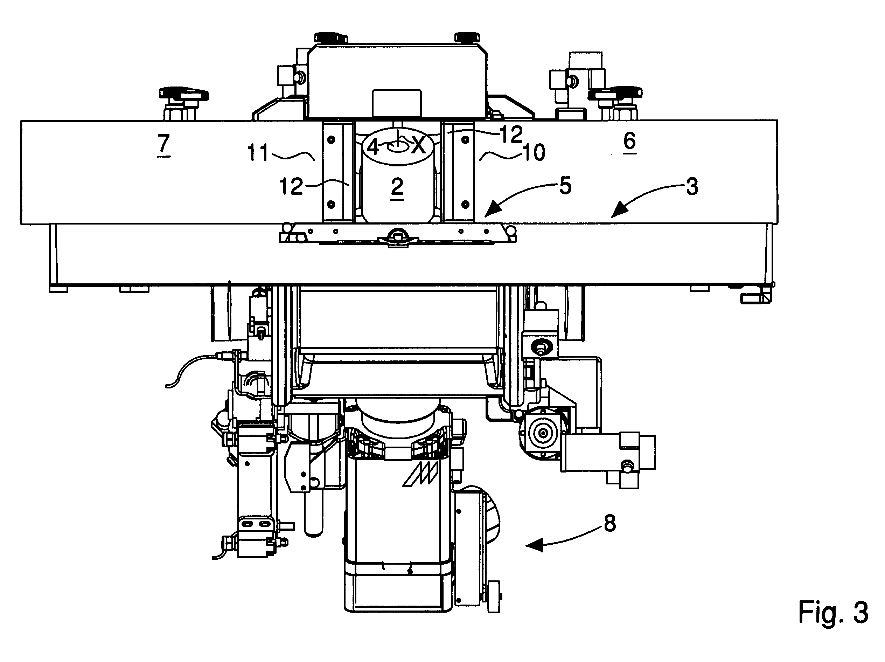

The spindle moulder 1 comprises a milling tool 2 (Figures 2 to 5) and a supporting plane 3 that is substantially horizontal for supporting the workpieces.

The tool 2, which is operationally positioned above the supporting plane 3, is mounted on a spindle shaft 4 that is rotatable around a rotation axis thereof X (Figures 2 to 5) by an actuator of first actuating means, which is not shown, of a first movement unit 8 (Figures 2 to 4).

This first actuating means further comprises further actuators arranged for tilting the spindle shaft 4, and the tool 2 therewith, with respect to the supporting plane 3 along a curved trajectory towards and away from the supporting plane 3, and for moving axially the spindle shaft 4, and the tool 2 therewith, along the rotation axis X for each tilt.

In this manner, in use, it is possible to adjust both a working height of the tool 2 and a tilt of the tool 2 with respect to the supporting plane 3 according to the dimensions of the workpiece and to the type of machining that it is desired to perform.

In one embodiment of the invention, which is not shown, the spindle shaft 4 is fixed, i.e. it is not tiltable, with respect to the supporting plane 3.

The aforesaid supporting plane 3 comprises a movable plane 5, facing and movable towards and away from the tool 2 (Figures 1 to 4).

In use, depending on the position of the spindle shaft 4 with respect to the supporting plane 3 and of a diameter of the tool 2, the plane 5 is driven manually or by one or more actuators of second actuating means that are not shown of a second movement unit towards or away from the tool 2 in such a manner as to enable the workpiece to be supported correctly.

The spindle moulder 1 further comprises a first guide 6 and a second guide 7 that are movable, the first guide 6 and the second guide 7 are supported by and extend substantially perpendicularly to the supporting plane 3 to guide, during machining, the workpieces along the supporting plane 3 (Figures 1 to 3).

In particular, the first guide 6 and the second guide 7 are substantially aligned and are positioned near and on opposite side to the tool 2.

In other words, in use, the tool 2 is operationally positioned between the first guide 6 and the second guide 7. In use, depending on the position of the spindle shaft 4 with respect to the supporting plane 3 and on a diameter of the tool 2, the first guide 6 and the second guide 7 are driven manually and/or by one or more actuators of third actuating means, which are not shown, of a third movement unit, towards or away from the tool 2 in such a manner as to enable the workpiece to be supported correctly.

The spindle moulder 1 further comprises an anti-collision system arranged for preventing, as will be disclosed better below, the tool 2 from colliding with an end portion 9, provided with a curved edge, that is not shown, of the plane 5 and with respective further end portions 10, 11 of the first guide 6 and of the second guide 7, the end portion 9 and the further end portions 10, 11 facing the tool 2 during a relative movement between the end portion 9 and the tool 2 and between the latter and the further end portions 10, 11, both if the spindle shaft 4 is stationary or rotated.

This anti-collision system comprises connecting means, which is not shown, for earthing the tool 2 via a base 18 of the spindle moulder 1, which is earthed in turn (Figure 1). Also, the anti-collision system comprises electric conducting elements 12, made of a conducting material, for example aluminium or copper.

Such electric conducting elements 12 are positioned above, in such a manner as to protrude at least partially from, parts of the spindle moulder 1 that can come into contact with the tool 2 during the relative movement between the latter and these parts.

In particular, the electric conducting elements 12 are positioned above the end portion 9 and above the further end portions 10, 11.

More precisely, the electric conducting elements 12 are positioned above the end portion 9 and above the further end portions 10, 11 in such a manner as to project at least partially from the end portion 9 and from the further end portions 10, 11.

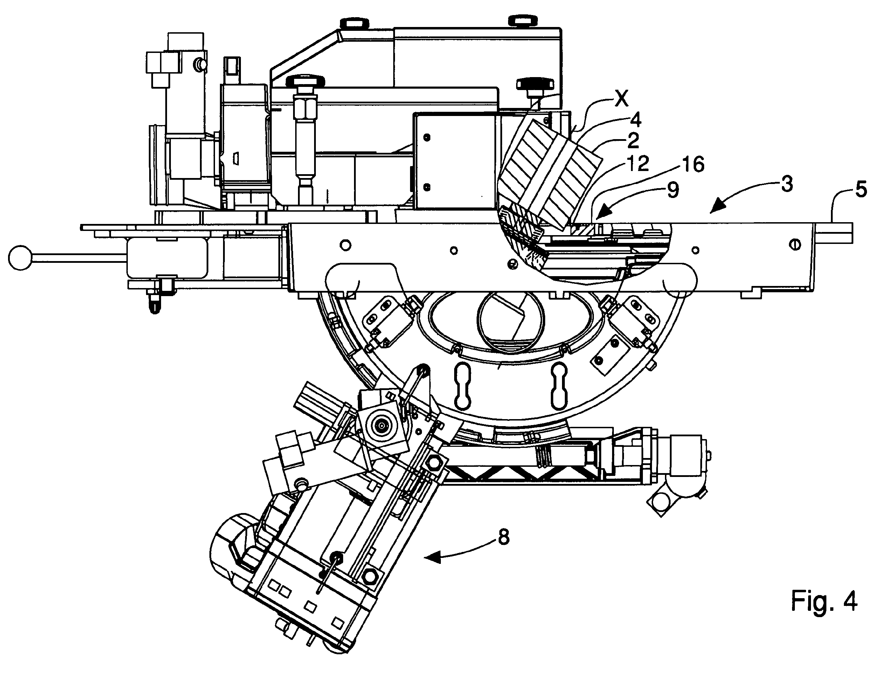

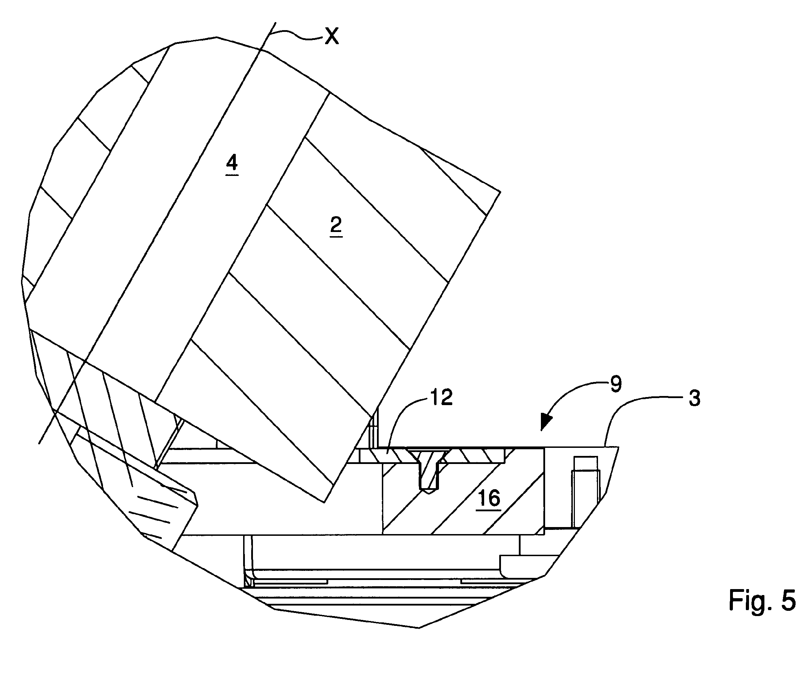

Between the end portion 9 and the electric conducting elements 12 and between the latter and the further end portions 10, 11 there are interposed insulating supports 16 (Figures 4 and 5), for example made of nylon, for insulating electrically the electric conducting elements 12 from the end portion 9 and from the further end portions 10, 11.

In one embodiment of the invention, which is not shown, the end portion 9 and the further end portions 10, 11 are made of insulating material and the electric conducting elements 12 are fixed directly on the end portion 9 and on the further end portions 10, 11 in such a manner as to project at least partially respectively from the end portion 9 and from the further end portions 10, 11.

In a further embodiment of the invention, which is not shown, the electric conducting elements 12 are buried, in particular housed, in and partially project from the parts of the spindle moulder 1 that can come into contact with the tool 2 during the relative movement between the latter and these parts.

More precisely, in this embodiment, the electric conducting elements 12 are positioned inside the end portion 9 and inside the further end portions 10, 11 in such a manner as to project at least partially from the end portion 9 and from the further end portions 10, 11.

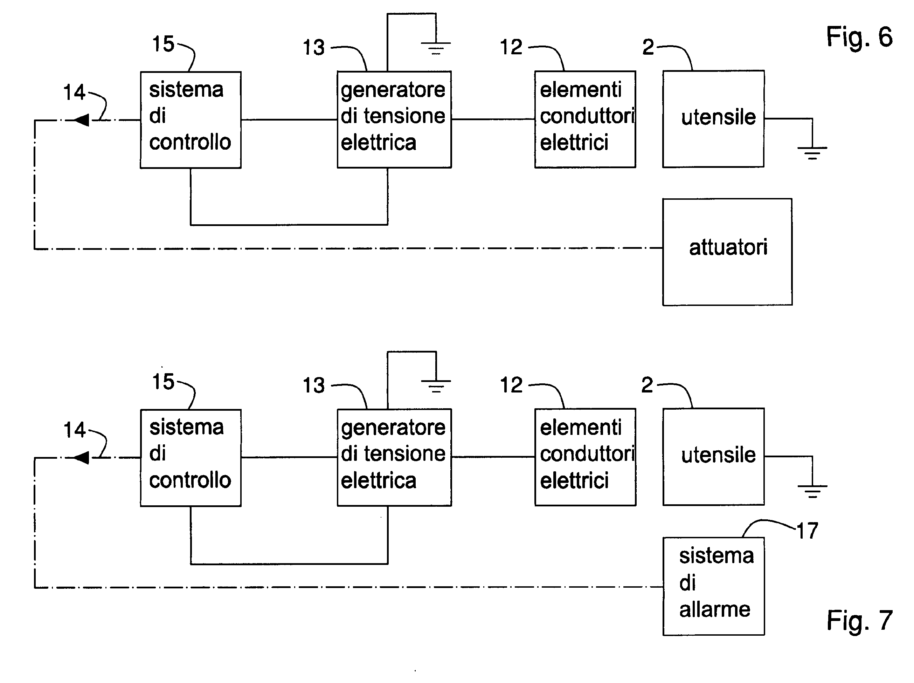

The anti-collision system further comprises a generator 13 of electric voltage that is shown schematically in Figures 6 and 7.

The generator 13, for example a transformer, is arranged for feeding a potential difference between the electric conducting elements 12 and the tool 2, the electric conducting elements 12 being feedable at a voltage of at least 6000V, for example comprised between 8000 and 10000V. In particular, the transformer is arranged for generating a low-amperage current that is not dangerous for the operator. Also, the anti-collision system includes a control system 15, shown schematically in Figures 6 and 7, configured in such a manner as to detect, substantially at a certain distance, for example comprised between 1mm and 10mm, between the tool 2 and the electric conducting elements 12, a current passage between the electric conducting elements 12 and the tool 2, and to emit a corresponding anti-collision control signal 14 when it detects this current passage.

This current passage is achieved in the form of an electric arc that passes between one or more of the electric conducting elements 12 fed with voltage and the earthed tool 2 substantially at the aforesaid distance, for example comprised between 1mm and 10mm.

In other words, the electric potential difference that is established at the aforesaid distance between one or more of the electric conducting elements 12 fed with voltage and the earthed tool 2 creates a spark that is detected by the control system 15 in the form of a electric current passage. Further, the control system 15, for example comprising a microprocessor, controls the electric voltage generator 13 in such a manner that the electric voltage generator 13 feeds the electric voltage to the electric conducting elements 12 when the first actuating means moves the tool 2 and/or the second actuating means moves the plane 5 and/or the third actuating means moves the first guide 6 and/or the second guide 7, and respectively in such a manner that the electric voltage generator 13 does not feed the electric voltage to the electric conducting elements 12 when the aforesaid current passage is detected.

In other words, the electric conducting elements 12 are not fed with voltage constantly but only during a relative movement between the end portion 9 and the tool 2 and between the latter and the further end portions 10, 11.

At the moment in which the aforesaid current passage is detected, the control system 15 sends the anti-collision control signal 14 to the actuators of the first actuating means of the first movement unit 8, of the second actuating means of the second movement unit and of the third actuating means of the third movement unit that automatically lock respectively the movement of the tool 2, of the plane 5 and of the first guide 6 and of the second guide 7 (Figure 6). In this manner, in the case of a spindle moulder 1 with all the movements motor-driven, it is possible, once the aforesaid current passage has been detected, to lock automatically the movement of the tool 2, of the plane 5, of the first guide 6 and of the second guide 7.

In another embodiment of the invention, shown schematically in Figure 7, the anti-collision control signal 14 is sent to an alarm system 17.

The alarm system 17 is arranged for emitting an alarm warning, for example an acoustic and/or luminous alarm warning, and/or for controlling a locking device, which is not shown, arranged for locking the movement of the tool 2 and of the machine part 9, 10, 11 when it receives the anti-collision control signal 14.

This locking device can be, for example, of pneumatic or electromagnetic type.

In this manner, in the case of a spindle moulder 1 with manual movements, once the aforesaid current passage has been detected, it is possible to alert the operator to the imminent collision and/or lock the movement of the tool 2, of the plane 5, of the first guide 6 and of the second guide 7, preventing the operator from acting on the manual movements.

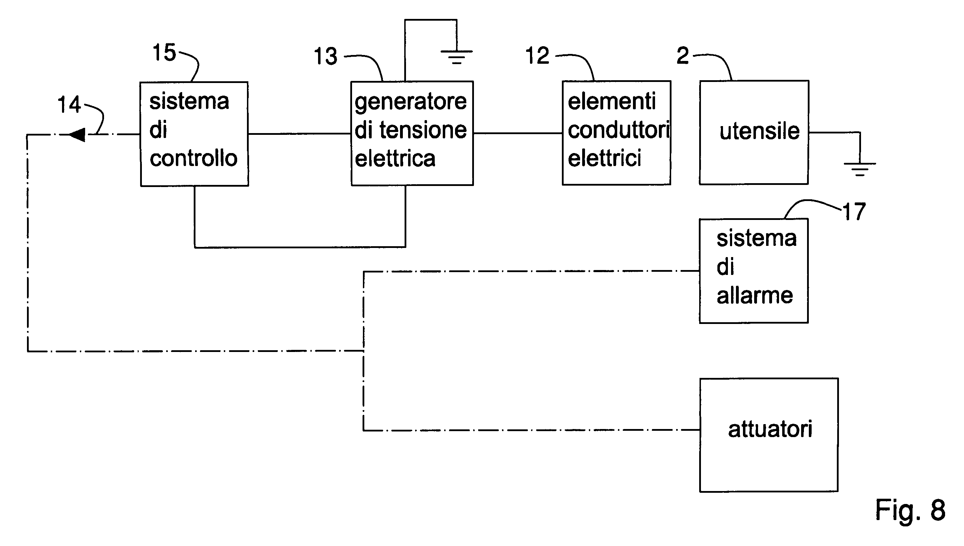

In a further embodiment of the invention, shown schematically in Figure 8, the anti-collision control signal 14 is sent both to the alarm system 17 and to the actuators of the first actuating means, if present, and/or of the second actuating means, if present, and/or of the third actuating means, if present.

In this manner, in the case of a spindle moulder 1 with some motor-driven movements and with other manual movements, it is possible, once the aforesaid current passage has been detected, to alert the operator to the imminent collision and/or lock the manual movements that are present by means of the locking device and/or automatically lock the motor-driven movements present.

Also, in another embodiment of the invention, which is not shown, the anti-collision control signal 14 can be sent only to a pneumatic locking device arranged for locking the movement of the tool 2, of the plane 5, of the first guide 6 and of the second guide 7.

Also in another further embodiment of the invention, which is not shown, in the case of a spindle moulder provided with an electronic control, the control signal can be sent to a control and management unit of the spindle moulder.

It should be noted that the aforesaid anti-collision device can be used in any machine tool in which it is required to avoid the collision between one part thereof and a further part thereof that are movable one relatively the other.

It should be noted how the anti-collision system according to the invention is safer and cheaper than known anti-collision systems.

In fact, the anti-collision system according to the invention does not require the electronic control with which known anti-collision systems are provided.

In fact, owing to the detection of the aforesaid current passage, it is possible to obtain a measurement of the distance that is not subject to human errors.

Further, the anti-collision system according to the invention does not require the spindle moulder to be provided with an electronic control having great calculating capacities.

In fact, the anti-collision control signal 14 can be sent, for example directly to the first actuating means of the first movement unit 8, to the second actuating means of the second movement unit and to the third actuating means of the third movement unit and/or to the alarm system 17 so as to lock the movement of the tool 2, of the plane 5, and of the first guide 6 and of the second guide 7.

## Claims

1. Machine (1) for machining workpieces of wood or similar materials, said machine (1) including a tool (2) and a machine part (9, 10, 11) positioned near said tool (2), said tool (2) and said machine part (9, 10, 11) being movable one relatively the other, said machine further including an anti-collision system which comprises electric conducting means (12) projecting at least partially from said machine part (9, 10, 11), electric voltage generating means (13) for feeding a potential difference between said electric conducting means (12) and said tool (2) and control means (15) configured in such a way as to detect, substantially at a distance between said tool (2) and said electric conducting means (12), a current passage between said electric conducting means (12) and said tool (2), and to emit a corresponding anti-collision control signal (14) as said current passage is detected, **characterised in that** said electric conducting means (12) is buried, at least partially, in said machine part (9, 10, 11).

2. Machine according to claim 1, and comprising connecting means for earthing said tool (2).

3. Machine according to claim 1, or 2, wherein said electric voltage generating means (13) feeds said electric conducting means (12) with a voltage of at least 6000V.

4. Machine according to any preceding claim, wherein said control means (15) controls said electric voltage generating means (13) in such a manner that said electric voltage generating means (13) feeds said electric voltage to said electric conducting means (12) when respective movement means of said tool (2) and of said machine part (9, 10, 11) move said tool (2) and/or said machine part (9, 10, 11) one relatively the other, and respectively in such a manner that said electric voltage generating means (13) does not feed said electric voltage to said electric conducting means (12) after said control means (15) detects said current passage.

5. Machine according to claim 4, wherein said control means (15) transmits said anti-collision control signal (14) to said respective movement means for locking the movement of said tool (2) and of said machine part (9, 10, 11), and/or to an alarm system (17) arranged for emitting an alarm warning when it receives said anti-collision control signal (14), or to a control and management unit of said machine (1).

6. Machine according to claim 5, wherein said alarm system (17) is arranged for controlling a locking device arranged for locking the movement of said tool (2) and of said machine part (9, 10, 11).

7. Machine according to any preceding claim, wherein said controlling means (15) comprises a microprocessor.

8. Machine according to any preceding claim, wherein said machine part (9, 10, 11) is made of insulating material.

9. Machine according to any preceding claim, and comprising insulating means (16) interposed between said electric conducting means (12) and said machine part (9, 10, 11) for insulating said electric conducting means (12) from said machine part (9, 10, 11).

10. Machine according to any preceding claim, wherein said electric voltage generating means (13) comprises a transformer.

11. Machine according to any preceding claim, wherein said machine is a spindle moulder (1), said spindle moulder (1) comprising a substantially horizontal supporting plane (3) for supporting said workpieces and a first guide element (6) and a second guide element (7) supported by and extending substantially perpendicularly to said supporting plane (3), for guiding said workpieces along said supporting plane (3), said first guide element (6) and said second guide element (7) being substantially aligned and being positioned on opposite sides of said tool (2).

12. Machine according to claim 11, wherein said machine part (9, 10, 11) comprises an end portion (9) of a movable part (5) of said supporting plane (3), said movable part (5) facing and being movable towards and away from said tool (2).

13. Machine according to claim 11, or 12, wherein said machine part (9, 10, 11) comprises respective further end portions (10, 11) of said first guide element (6) and of said second guide element (7), said further end portions (10, 11) facing, and being positioned on opposite sides of, said tool (2).

14. Anti-collision method for preventing a collision between a tool (2) of a machine (1) for machining workpieces made of wood or similar materials and a part (9, 10, 11) of said machine which is near said tool (2), said tool (2) and said machine part (9, 10, 11) being movable one relatively the other, the method comprising positioning electric conducting means (12) on said machine part (9, 10, 11) in such a manner that said electric conducting means (12) projects at least partially from said machine part (9, 10, 11), feeding a potential difference between said electric conducting means (12) and said tool (2), detecting, substantially at a distance between said tool (2) and said electric conducting means (12), a current passage between said electric conducting means (12) and said tool (2) and emitting a corresponding anti-collision control signal (14) as said current passage is detected, and **characterised in that** said electric conducting means (12) is buried, at least partially, in said machine part (9, 10, 11).

## Patentansprüche

1. Maschine (1) zum Bearbeiten von Werkstücken aus Holz oder ähnlichen Materialien, wobei die Maschine (1) ein Werkzeug (2) und einen Maschinenteil (9, 10, 11) aufweist, der nahe zu dem Werkzeug (2) angeordnet ist, wobei das Werkzeug (2) und das Maschinenteil (9, 10, 11) zueinander beweglich sind, wobei die Maschine des Weiteren ein Anti-Kollisionssystem, das ein elektrisch leitendes Mittel (12) umfasst, das wenigstens teilweise von dem Maschinenteil (9, 10, 11) hervorsteht, ein elektrisches Spannungserzeugungsmittel (13) zum Einspeisen einer Potentialdifferenz zwischen dem elektrisch leitenden Mittel (12) und dem Werkzeug (2), und ein Steuerungsmittel (15) aufweist, das so konfiguriert ist, dass es im Wesentlichen in einem Abstand zwischen dem Werkzeug (2) und dem elektrisch leitenden Mittel (12) einen Stromdurchgang zwischen dem elektrisch leitenden Mittel (12) und dem Werkzeug (2) erfasst und ein entsprechendes Anti-Kollisionssteuerungssignal (14) emittiert, wenn der Stromdurchgang erfasst wird, **dadurch gekennzeichnet, dass** das elektrisch leitende Mittel (12) wenigstens teilweise in dem Maschinenteil (9, 10, 11) verborgen ist.

2. Maschine nach Anspruch 1, und ein Verbindungsmittel zum Erden des Werkzeugs (2) umfassend.

3. Maschine nach einem der Ansprüche 1 oder 2, bei welcher das elektrische Spannung erzeugende Mittel (13) dem elektrisch leitenden Mittel (12) eine Spannung von wenigstens 6000 Volt einspeist.

4. Maschine nach einem der vorstehenden Ansprüche, bei welcher das Steuerungsmittel (15) das elektrische Spannung erzeugende Mittel (13) in so einer Weise steuert, dass das elektrische Spannung erzeugende Mittel (13) dem elektrisch leitenden Mittel (12) die elektrische Spannung einspeist, wenn ein jeweiliges Bewegungsmittel des Werkzeugs (2) und des Maschinenteils (9, 10, 11) das Werkzeug (2) und/oder das Maschinenteil (9, 10, 11) relativ zu einander bewegt, bzw. in so einer Weise steuert, dass das elektrische Spannung erzeugende Mittel (13) dem elektrisch leitenden Mittel (12) keine Spannung einspeist, nachdem das Steuerungsmittel (15) den Stromdurchgang erfasst.

5. Maschine nach Anspruch 4, bei welcher das Steuerungsmittel (15) das Anti-Kollisionssteuerungssignal (14) dem jeweiligen Bewegungsmittel überträgt, um die Bewegung des Werkzeugs (2) und des Maschinenteils (9, 10, 11) zu sperren, und/oder zu einem Alarmsystem (17) überträgt, das zum Emittieren einer Alarmwarnung angeordnet ist, wenn es das Anti-Kollisionssteuerungssignal (14) empfängt, oder zu einer Steuerungs- und Verwaltungseinheit der Maschine (1) überträgt.

6. Maschine nach Anspruch 5, bei welcher das Alarmsystem (17) zum Steuern einer Sperrvorrichtung angeordnet ist, die zum Sperren der Bewegung des Werkzeugs (2) und des Maschinenteils (9, 10, 11) angeordnet ist.

7. Maschine nach einem der vorstehenden Ansprüche, bei welcher das Steuerungsmittel (15) einen Mikroprozessor umfasst.

8. Maschine nach einem der vorstehenden Ansprüche, bei welcher das Maschinenteil (9, 10, 11) aus einem isolierenden Material hergestellt ist.

9. Maschine nach einem der vorstehenden Ansprüche, und ein Isoliermittel (16) umfassend, das zwischen dem elektrisch leitenden Mittel (12) und dem Maschinenteil (9, 10, 11) zum Isolieren des elektrisch leitenden Mittels (12) von dem Maschinenteil (9, 10, 11) angeordnet ist.

10. Maschine nach einem der vorstehenden Ansprüche, bei welcher das elektrische Spannung erzeugende Mittel (13) einen Transformator umfasst.

11. Maschine nach einem der vorstehenden Ansprüche, bei welcher die Maschine eine Tischfräsmaschine (1) ist, wobei die Tischfräsmaschine (1) eine im Wesentlichen horizontale Stützebene (3) zum Stützen des Werkstücks und ein erstes Führungselement (6) und ein zweites Führungselement (7) umfasst, die von der Stützebene (3) gestützt sind und sich im Wesentlichen senkrecht dazu erstrecken, um das Werkstück entlang der Stützebene (3) zu führen, wobei das erste Führungselement (6) und das zweite Führungselement (7) im Wesentlichen fluchten und auf entgegengesetzten Seiten des Werkzeugs (2) angeordnet sind.

12. Maschine nach Anspruch 11, bei welcher das Maschinenteil (9, 10, 11) einen Endteil (9) eines beweglichen Teils (5) der Stützebene (3) umfasst, wobei das bewegliche Teil (5) zu dem Werkzeug (2) ausgerichtet ist und zu und weg von dem Werkzeug (2) beweglich ist.

13. Maschine nach einem der Ansprüche 11 oder 12, bei welcher das Maschinenteil (9, 10, 11) jeweils weitere Endteile (10, 11) des ersten Führungselements (6) und des zweiten Führungselements (7) umfasst, wobei die weiteren Endteile (10, 11) zu entgegengesetzten Seiten des Werkzeugs (2) ausgerichtet und angeordnet sind.

14. Anti-Kollisionsverfahren zum Vermeiden einer Kollision zwischen einem Werkzeug (2) einer Maschine (1) zum Verarbeiten von Werkstücken, die aus Holz oder ähnlichen Materialien hergestellt sind, und einem Teil (9, 10, 11) der Maschine, das nah an dem Werkzeug (2) ist, wobei das Werkzeug (2) und das Maschinenteil (9, 10, 11) zueinander beweglich sind, wobei das Verfahren Anordnen eines elektrisch leitenden Mittels (12) auf dem Maschinenteil (9, 10, 11) in so einer Weise, dass das elektrisch leitende Mittel (12) wenigstens teilweise von dem Maschinenteil (9, 10, 11) hervorsteht, Einspeisen einer Potentialdifferenz zwischen dem elektrisch leitenden Mittel (12) und dem Werkzeug (2), Erfassen, im Wesentlichen in einem Abstand zwischen dem Werkzeug (2) und dem elektrisch leitenden Mittel (12), eines Stromdurchgangs zwischen dem elektrisch leitenden Mittel (12) und dem Werkzeug (2) und Emittieren eines entsprechenden Anti-Kollisionssteuerungssignal (14) umfasst, wenn der Stromdurchgang erfasst wird, und **dadurch gekennzeichnet, dass** das elektrisch leitende Mittel (12) wenigstens teilweise in dem Maschinenteil (9, 10, 11) verborgen ist.

## Revendications

1. Machine (1) pour l'usinage de pièces de travail en bois ou en des matériaux similaires, ladite machine (1) comprenant un outil (2) et une pièce de machine (9, 10, 11) mise en place au voisinage dudit outil (2), ledit outil (2) et ladite pièce de machine (9, 10, 11) étant mobiles l'un par rapport à l'autre, ladite machine incorporant en outre un système anti-collision qui comprend des moyens électriquement conducteurs (12) disposés en saillie au moins partiellement à partir de ladite pièce de machine (9, 10, 11), des moyens de génération de tension électrique (13) pour fournir une différence de potentiel entre lesdits moyens électriquement conducteurs (12) et ledit outil (2), et des moyens de commande (15) configurés de manière à détecter, sensiblement à une distance entre ledit outil (2) et lesdits moyens électriquement conducteurs (12), un passage de courant entre lesdits moyens électriquement conducteurs (12) et ledit outil (2), et à émettre un signal de commande anti-collision (14) correspondant lorsque ledit passage de courant est détecté, **caractérisée en ce que** lesdits moyens électriquement conducteurs (12) sont enfouis, au moins partiellement, à l'intérieur de ladite pièce de machine (9, 10, 11).

2. Machine selon la revendication 1, et comprenant des moyens de connexion pour mettre à la terre ledit outil (2).

3. Machine selon la revendication 1 ou 2, dans laquelle lesdits moyens de génération de tension électrique (13) fournissent auxdits moyens électriquement conducteurs (12) une tension d'au moins 6000V.

4. Machine selon une quelconque revendication précédente, dans laquelle lesdits moyens de commande (15) commandent lesdits moyens de génération de tension électrique (13) d'une manière telle que lesdits moyens de génération de tension électrique (13) fournissent ladite tension électrique auxdits moyens électriquement conducteurs (12) lorsque des moyens de mouvement respectifs dudit outil (2) et de ladite pièce de machine (9, 10, 11) déplacent ledit outil (2) et/ou ladite pièce de machine (9, 10, 11) l'un par rapport à l'autre, et, respectivement, d'une manière telle que lesdits moyens de génération de tension électrique (13) ne fournissent pas ladite tension électrique auxdits moyens électriquement conducteurs (12) après la détection dudit passage de courant par lesdits moyens de commande (15).

5. Machine selon la revendication 4, dans laquelle lesdits moyens de commande (15) transmettent ledit signal de commande anti-collision (14) auxdits moyens de mouvement respectifs pour bloquer le mouvement dudit outil (2) et de ladite pièce de machine (9, 10, 11), et/ou à un système d'alarme (17) organisé pour émettre un avertissement d'alarme lorsqu'il reçoit ledit signal de commande anti-collision (14), ou à une unité de commande et de gestion de ladite machine (1).

6. Machine selon la revendication 5, dans laquelle ledit système d'alarme (17) est organisé pour commander un dispositif de verrouillage organisé pour bloquer le mouvement dudit outil (2) et de ladite pièce de machine (9, 10, 11).

7. Machine selon une quelconque revendication précédente, dans laquelle lesdits moyens de commande (15) comprennent un microprocesseur.

8. Machine selon une quelconque revendication précédente, dans laquelle ladite pièce de machine (9, 10, 11) est réalisée en un matériau isolant.

9. Machine selon une quelconque revendication précédente, et comprenant des moyens d'isolation (16) interposés entre lesdits moyens électriquement conducteurs (12) et ladite pièce de machine (9, 10, 11) pour isoler lesdits moyens électriquement conducteurs (12) de ladite pièce de machine (9, 10, 11).

10. Machine selon une quelconque revendication précédente, dans laquelle lesdits moyens de génération de tension électrique (13) comprennent un transformateur.

11. Machine selon une quelconque revendication précédente, dans laquelle ladite machine est une toupie (1), ladite toupie (1) comprenant un plan de support (3) sensiblement horizontal, pour soutenir lesdites pièces de travail, ainsi qu'un premier élément de guidage (6) et un deuxième élément de guidage (7) portés par ledit plan de support (3) et s'étendant de manière sensiblement perpendiculaire à celui-ci afin de guider lesdites pièces de travail le long dudit plan de support (3), ledit premier élément de guidage (6) et ledit deuxième élément de guidage (7) étant sensiblement alignés et étant mis en place sur des côtés opposés dudit outil (2).

12. Machine selon la revendication 11, dans laquelle ladite pièce de machine (9, 10, 11) comprend une partie d'extrémité (9) d'une pièce mobile (5) dudit plan de support (3), ladite pièce mobile (5) faisant face audit outil (2) tout en étant mobile vers lui et en s'éloignant de lui.

13. Machine selon la revendication 11 ou 12, dans laquelle ladite pièce de machine (9, 10, 11) comprend des parties d'extrémité supplémentaires (10, 11) respectives dudit premier élément de guidage (6) et dudit deuxième élément de guidage (7), lesdites parties d'extrémité supplémentaires (10, 11) faisant face audit outil (2) et en étant mis en place sur des côtés opposés de celui-ci.

14. Procédé anticollision destiné à empêcher une collision entre un outil (2) d'une machine (1) destinée à usiner des pièces de travail en bois ou en des matériaux similaires et une pièce (9, 10, 11) de ladite machine qui est au voisinage dudit outil (2), ledit outil (2) et ladite pièce de machine (9, 10, 11) étant mobiles l'un par rapport à l'autre, le procédé comprenant la mise en place des moyens électriquement conducteurs (12) sur ladite pièce de machine (9, 10, 11) d'une manière telle que lesdits moyens électriquement conducteurs (12) sont en saillie au moins partiellement à partir de ladite pièce de machine (9, 10, 11), la fourniture d'une différence de potentiel entre lesdits moyens électriquement conducteurs (12) et ledit outil (2), la détection, sensiblement à une distance entre ledit outil (2) et lesdits moyens électriquement conducteurs (12), un passage de courant entre lesdits moyens électriquement conducteurs (12) et ledit outil (2), et l'émission d'un signal de commande anti-collision (14) correspondant lorsque ledit passage de courant est détecté, et **caractérisé en ce que** lesdits moyens électriquement conducteurs (12) sont enfouis, au moins partiellement, à l'intérieur de ladite pièce de machine (9, 10, 11).
